# FASCICULE DE BREVET EUROPEEN

(11) **EP 0 421 481 B1**
(45) Date de publication et mention de la délivrance du brevet: **04.08.1993**
(21) Numéro de dépôt: 90120446.1
(22) Date de dépôt: 23.12.1986
(51) Int. Cl.: F02B 13/10, F02B 47/08, F02M 25/06, F02B 17/00

(54) **Dispositif d'introduction de gaz sous pression dans une chambre de combustion d'un moteur à combustion interne multicylindre**
Einrichtung zum Einlass von Druckgasen in eine Brennkammer einer Brennkraftmaschine
Device for introducing pressurized gas in a combustion chamber of an internal combustion engine

(30) Priorité: 30.12.1985 FR 8519432
(43) Date de publication de la demande: 10.04.1991
(62) Demande divisionnaire de: 86402915.2
(73) Titulaire: INSTITUT FRANCAIS DU PETROLE, 92502 Rueil-Malmaison (FR)
(72) Inventeur: Duret, Pierre, F-75009 Paris (FR)

(56) Documents cités:
- DE-A- 1 576 009
- DE-A- 2 453 193
- GB-A- 1 102 754
- US-A- 4 445 467
- US-A- 4 503 817

## Description

La présente invention concerne un dispositif et un procédé pour introduire un gaz sous pression dans une chambre de combustion d'un moteur alternatif à combustion interne. Le dispositif et le procédé selon l'invention permettent, lorsqu'ils sont appliqués à un moteur à allumage commandé, une amélioration de l'initiation de la combustion et une augmentation de la vitesse de combustion par introduction de gaz (air ou mélange carburé avec éventuellement des gaz brûlés) au voisinage des électrodes de la bougie et de l'instant d'allumage.

Le dispositif suivant l'invention utilise la pression et éventuellement les effets d'onde de pression des gaz brûlés pendant la détente dans un cylindre pour injecter une certaine quantité d'air ou de mélange carburé avec éventuellement des gaz brûlés au voisinage de la bougie d'allumage d'un autre cylindre.

Ainsi, la présente invention concerne un moteur à combustion interne comportant au moins un premier et un deuxième cylindre, des moyens d'alimentation en carburant des cylindres, au moins une canalisation distincte des moyens d'alimentation en carburant et reliant un cylindre à la chambre de combustion d'un autre cylindre, ladite chambre de combustion comportant au moins une bougie, la canalisation comportant un organe d'obstruction intermittente et débouchant dans la chambre de combustion au voisinage de la bougie.

Plus précisément, l'invention a pour objet un dispositif d'introduction de gaz sous pression dans une chambre de combustion d'un tel moteur. Un tel dispositif est connu de US-A-4 503 817. Selon l'invention, le dispositif d'introduction de gaz sous pression se caractérisé en ce que l'organe d'obstruction s'ouvre alors que les gaz contenus dans la chambre de combustion sont en phase de fin de compression, et en ce que l'axe de la canalisation au niveau de la chambre de combustion est dirigé vers les électrodes de ladite bougie, de sorte qu'un gradient de vitesse peut être réalisé autour des électrodes de la bougie, ce qui favorise l'initiation de la combustion.

Cet organe d'obstruction n'autorise le passage de gaz que dans le sens de la canalisation vers la chambre de combustion.

Selon un mode préféré de réalisation, l'extrémité de la canalisation débouchant dans la chambre de combustion est orientée de façon à introduire les gaz en direction de la bougie d'allumage, ceci n'est pas le cas du dispositif décrit dans le brevet allemand DE-1.576.009.

Le dispositif selon l'invention permet de réaliser un gradient de vitesses autour des électrodes de la bougie ce qui favorise l'initiation de la combustion. De même il permet de réaliser un gradient de concentration de la charge au voisinage des électrodes de la bougie lorsque les gaz provenant de la canalisation débouchant dans le cylindre sont enrichis en carburant.

Ceci n'est pas non plus divulguée par le document US-A-4.503.817 qui décrit un système d'injection d'air et/ou de mélange carburé dans une chambre de combustion, le système permettant de créer un double flux autour de la bougie d'allumage.

Selon l'invention, la lumière, extrémité de la canalisation du côté du deuxième cylindre pourra de préférence avoir une forme telle qu'elle favorise l'utilisation de la pression des gaz brûlés et éventuellement des effets d'ondes de pression.

De même, l'emplacement de l'extrémité débouchant dans la chambre de combustion du premier cylindre et sa géométrie déterminant la forme et la direction du jet, seront définis de façon à rechercher l'amélioration de la combustion.

On ne sortira pas du cadre de la présente invention si la canalisation dans sa partie étanche et sous pression comporte un dispositif d'enrichissement en combustible.

La présente invention est appliquée à un moteur comportant au moins deux cylindres. On relie par la canalisation un orifice ou lumière d'un cylindre avec un orifice débouchant dans la chambre de combustion d'un autre cylindre.

D'une manière générale, la présente invention concerne un dispositif d'introduction de gaz sous pression dans une chambre de combustion d'un moteur à combustion interne comportant au moins deux cylindres.

Ce dispositif comporte une canalisation et au moins un organe d'obstruction intermittente, ladite canalisation mettant en communication ledit cylindre et ladite chambre de combustion via ledit organe d'obstruction. Ce cylindre comporte au moins une bougie. L'axe de cette canalisation au niveau du cylindre est dirigé vers les électrodes de la bougie.

Les avantages de l'invention seront mis en évidence dans la suite de la description, donnée à titre d'exemple non limitatif, en se référant aux figures annexées parmi lesquelles :
- la figure 1 montre schématiquement et en coupe un moteur multicylindre équipé du dispositif suivant l'invention,
- les figures 2 et 3 illustrent un détail de réalisation de la lumière et de son raccordement avec une canalisation.

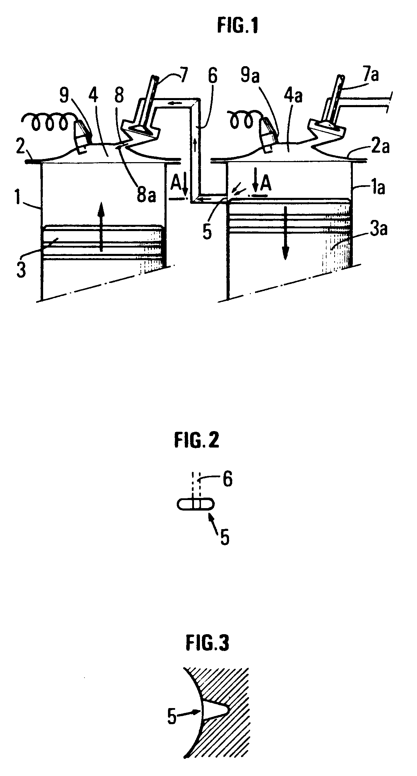

La figure 1 est une représentation schématique d'un moteur à combustion interne multicylindre équipé du dispositif suivant l'invention.

La référence 1 désigne un premier cylindre fermé à sa partie supérieure par la culasse 2. Dans le premier cylindre se déplace le piston 3 définissant la chambre de combustion 4.

Une lumière 5 est pratiquée dans la paroi d'un deuxième cylindre 1a. De façon préférentielle, un décalage angulaire est prévu entre le premier et le deuxième cylindre. Une canalisation, schématisée en 6, relie alors la lumière 5 réalisée dans le deuxième cylindre 1a avec la chambre de cobustion 4 du premier cylindre 1 via un organe d'obstruction 7..

Cet organe d'obstruction 7, tel une soupape (qui peut être commandée par une came) ou clapet anti-retour permet d'obturer la canalisation 6 à certaines périodes du cycle en amont de l'orifice 8 débouchant dans la chambre 4 au voisinage de la bougie 9. La canalisation alimentant l'orifice 8 est orientée de manière à diriger les gaz vers les électrodes de la bougie 9 comme cela est représenté par la flèche 8a de la figure 1 qui correspond sensiblement à l'axe de la canalisation 6 au niveau du premier cylindre 1.

Ceci permet de réaliser un gradient de vitesse autour des électrodes de la bougie ce qui favorise l'initiation de la combustion. Par ailleurs ceci permet lorsque les gaz provenant de l'orifice 8 sont enrichis en carburant de réaliser un gradient de concentration en carburant autour des électrodes de la bougie, ce qui est également favorable à l'initiation de la combustion. Un tel agencement permet un bon fonctionnement du moteur en mélange globalement pauvre ou dilué par des gaz recyclés comme cela se fait sur certains moteurs. Bien entendu ce recyclage des gaz de combustion est totalement indépendant de la canalisation 6 qui ne transfère que de faibles débits.

Le fonctionnement du moteur selon l'invention va maintenant être décrit en relation avec la figure 1. A l'ouverture de la lumière 5 par le piston 3a du deuxième cylindre, le deuxième cylindre 1a est dans la phase de détente et le premier cylindre 1 est dans la phase de compression de telle sorte que les gaz brûlés à une pression élevée poussent le contenu de la canalisation 6 vers l'organe d'obstruction 7.

De plus, dans le cas où l'organe d'obstruction 7 est un organe anti-retour automatique, tel un clapet, pendant la phase de compression du cylindre 1a alors que le cylindre 1 est en phase d'aspiration, les gaz brûlés que pourrait contenir la canalisation 6 suite à l'injection ci-dessus décrite ayant eu lieu au cycle précédent, peuvent être balayés par les gaz frais enfermés dans le cylindre 1a. Ainsi, avant l'injection déjà décrite, la canalisation 6 ne pourrait alors contenir pratiquement que des gaz frais. Il en est de même si l'organe d'obstruction 7 est un organe commandé pour s'ouvrir à la fois pendant cette phase de balayage de la canalisation 6 et pendant la phase d'injection.

D'une manière générale selon la présente invention l'organe d'obturation 7 est ouvert lorsque le cylindre qu'il équipe est en phase de fin de compression et l'énergie qui va servir à transférer les gaz contenus dans la canalisation 6 provient de la différence de pression P₂-P₁ entre les gaz de détente d'un cylindre et de compression d'un autre cylindre.

Par ailleurs pour bénéficier d'un effet d'onde de pression maximum à l'ouverture de la lumière 5, il pourra être envisagé de donner à celle-ci et à son raccordement avec la canalisation 6, la forme appropriée permettant d'augmenter ces effets. Un exemple est indiqué aux figures 2 et 3, utilisant une forme convergente. La figure 2 représente la forme de la lumière 5 telle qu'elle serait vue par un observateur situé à l'intérieur du cylindre. La figure 3 représente la coupe AA indiquée à la figure 1.

Enfin, il pourra aussi être envisagé, sans sortir du cadre de l'invention, d'ajouter un dispositif d'obstruction supplémentaire (non représenté) le long de la canalisation 6 ou encore une canalisation et un dispositif anti-retour en relation arec une source de gaz ou une combinaison de ces deux dispositifs supplémentaires.

D'une manière générale, la canalisation 6 n'a pas pour rôle d'injecter la totalité du carburant dans le moteur mais, comme il a été dit plus haut, de favoriser l'initiation de la combustion par la création d'un gradient de vitesses autour des électrodes de la bougie et/ou par la création d'un gradient de concentrations autour des électrodes de la bougie en l'y enrichissant en carburant. Dans ce cas bien entendu la canalisation 6 comportera un organe d'introduction du combustible. Ainsi au moment où la canalisation 6 dirige son jet vers les électrodes de la bougie 9 pour favoriser l'initiation de la combustion, normalement ledit premier cylindre contient un mélange d'air et de carburant et est de plus dans sa phase de compression. Selon un mode de réalisation préféré, l'organe d'obturation est fermé juste avant que le signal d'allumage n'excite la bougie ceci notamment dans le cas ou l'organe d'obturation est commandé.

De même, une source d'enrichissement en combustible pourrait être placée le long de la canalisation 6, le dessin de la lumière 5 et son raccordement avec la canalisation 6 étant adaptés à augmenter les effets d'onde de pression.

La présente invention s'applique à tous types de moteurs à combustion interne à allumage commandé ayant au moins deux cylindres et elle permet le contrôle de l'aérodynamique interne de la charge contenue dans les cylindres du moteur équipés du dispositif selon la présente invention.

Selon un mode de réalisation de la présente invention l'organe d'obturation 7 est en position ouverte alors que le cylindre qu'il équipe est en phase de compression.

## Revendications

1. Dispositif d'introduction de gaz sous pression dans une chambre de combustion (4) d'un moteur à combustion interne comportant au moins un premier et un deuxième cylindre (1, 1a), des moyens d'alimentation en carburant desdits cylindres, au moins une canalisation (6) distincte desdits moyens d'alimentation en carburant et reliant un cylindre à ladite chambre de combustion (4) d'un autre cylindre, ladite chambre de combustion comportant au moins une bougie (9), ladite canalisation comportant un organe (7) d'obstruction intermittente et débouchant dans ladite chambre de combustion (4) au voisinage de ladite bougie, caractérisé en ce que ledit organe d'obstruction (7) s'ouvre alors que les gaz contenus dans ladite chambre de combustion (4) sont en phase de fin de compression, et en ce que l'axe de ladite canalisation (6) au niveau de la chambre de combustion (4) est dirigé vers les électrodes de ladite bougie (9), de sorte qu'un gradient de vitesse peut être réalisé autour des électrodes de la bougie, ce qui favorise l'initiation de la combustion.

2. Dispositif selon la revendication 1, caractérisé en ce qu'il comprend un dispositif d'obstruction supplémentaire placé le long de ladite canalisation (6).

3. Dispositif selon l'une quelconque des revendications 1 ou 2, caractérisé en ce qu'il comprend en outre une canalisation supplémentaire et un dispositif anti-retour relié à une source de gaz.

4. Dispositif selon l'une quelconque des revendications précédentes, caractérisé en ce que la forme d'une lumière (5) pratiquée dans la paroi du deuxième cylindre (la) pour le raccordement avec ladite canalisation (6), est adaptée pour augmenter l'effet d'onde de pression lors de l'ouverture de ladite lumière.

## Patentansprüche

1. Vorrichtung zum Einführen von Gas unter Druck in eine Brennkammer (4) einer Brennkraftmaschine mit wenigstens einem ersten und einem zweiten Zylinder (1, 1a), Mitteln zur Speisung dieser Zylinder mit Brennstoff, wenigstens einer Leitung (6), die sich von diesen Mitteln zur Brennstoffspeisung unterscheidet, welche einen Zylinder mit dieser Brennkammer (4) eines anderen Zylinders verbindet, wobei diese Brennkammer wenigstens eine Zyndkerze (9) umfaßt und diese Leitung ein intermittierendes Verschlußorgan (7) aufweist und in diese Brennkammer (4) benachbart dieser Zündkerze mündet, **dadurch gekennzeichnet**, daß dieses Verschlußorgan (7) sich öffnet, wenn die in dieser Brennkammer (4) enthaltenen Gase bei ende der Kompression in Phase sind und daß die Achse dieser Leitung (6) in Höhe der Brennkammer (4) gegen die Elektroden dieser Zündkerze (9) derart gerichtet ist, daß ein Geschwindigkeitsgradient um Elektroden der Zündkerze realisiert werden kann, was die Einleitung der Verbrennung begünstigt.

2. Vorrichtung nach Anspruch 1, dadurch gekennzeichnet, daß sie ein zusätzliches Verschlußorgan umfaßt, das längs dieser Leitung (6) angeordnet ist.

3. Vorrichtung nach einem der Ansprüche 1 oder 2, dadurch gekennzeichnet, daß sie des weiteren eine zusätzliche Leitung und eine mit einer Gasquelle verbundene die Rückströmung verhindernde Einrichtung umfaßt.

4. Vorrichtung nach einem der vorhergehenden Ansprüche, dadurch gekennzeichnet, daß die Form eines in der Wandung des zweiten Zylinders (1a) ausgesparten Schlitzes (5) zur Verbindung mit dieser Leitung (6) so ausgelegt ist, daß der Druckwelleneffekt beim Öffnen dieses Schlitzes erhöht wird.

## Claims

1. Device for introducing gas under pressure into a combustion chamber (4) in an internal combustion engine having at least a first and a second cylinder (1, 1a), means for supplying the said cylinders with fuel, at least one pipe (6) separate from the said fuel supply means and connecting one cylinder to the said combustion chamber (4) of another cylinder, the said combustion chamber having at least one spark plug (9), the said pipe including an intermittent obstruction device (7) opening out into the said combustion chamber (4) in the vicinity of the said spark plug, characterised in that the said obstruction device (7) opens whilst the gases contained in the said combustion chamber (4) are in the end of compression phase, and in that the axis of the said pipe (6) at the combustion chamber (4) is directed towards the electrodes of the said spark plug (9), so that a velocity gradient can be produced around the electrodes of the spark plug, which assists the initiation of combustion.

2. Device according to Claim 1, characterised in that it comprises an additional obstruction device positioned along the said pipe (6).

3. Device according to either one of Claims 1 or 2, characterised in that it also comprises an additional pipe and a non-return device connected to a source of gas.

4. Device according to any one of the preceding claims, characterised in that the shape of a port (5) produced in the wall of the second cylinder (1a) for connection to the said pipe (6) is suitable for increasing the pressure wave effect when the said port is opened.
